# Europäisches Patentamt
# European Patent Office
# Office européen des brevets

(11) Veröffentlichungsnummer: **0 124 636**
**B1**

(12) **EUROPÄISCHE PATENTSCHRIFT**

(45) Veröffentlichungstag der Patentschrift:
25.11.87

(21) Anmeldenummer: 83105985.2

(22) Anmeldetag: 18.06.83

(51) Int. Cl.⁴: **F 23 C 11/02**

(54) **Wirbelbettfeuerung.**

(30) Priorität: 10.05.83 CH 2550/83

(43) Veröffentlichungstag der Anmeldung:
14.11.84 Patentblatt 84/46

(45) Bekanntmachung des Hinweises auf die Patenterteilung:
25.11.87 Patentblatt 87/48

(84) Benannte Vertragsstaaten:
BE DE FR

(56) Entgegenhaltungen:
DE-A-2 406 649
DE-A-2 710 522
DE-A-2 836 531

(73) Patentinhaber: GEBRÜDER SULZER
AKTIENGESELLSCHAFT, Zürcherstrasse 9, CH-
8401 Winterthur (CH)

(72) Erfinder: Schenk, Hans- Rudolf, Im Morgentau 15b,
CH- 8406 Winterthur (CH)

(74) Vertreter: Dipl.- Ing. H. Marsch Dipl.- Ing. K.
Sparing Dipl.- Phys.Dr. W.H. Röhl
Patentanwälte, Rethelstrasse 123, D-4000
Düsseldorf (DE)

EP 0 124 636 B1

LIBER, STOCKHOLM 1987

## Beschreibung

Die Erfindung betrifft eine Wirbelbettfeuerung gemäss dem ersten Teil des Anspruchs 1.

Eine solche Wirbelbettfeuerung ist aus der DE-A-2 836 531 bekannt und soll der Verbrennung von Abfall oder Brennstoff mit niedrigem Heizwert dienen. Bei der bekannten Feuerung wird das zu verbrennende Material von oben dem zwischen der Trennwand und der ihr benachbarten Brennkammerwand befindlichen, unfluidisierten Raum zugeführt, von dem aus es dann - unterstützt von einer trichterartig geneigten Bodenfläche - über den Spalt in den fluidisierten Teil des Wirbelbettes gelangt. Hierdurch soll bezweckt werden, dass sehr wenig unverbranntes Material jemals die Oberfläche des fluidisierten Bettes erreicht, so dass ein Entweichen von leichtem unverbranntem Material in die oberhalb des Bettes befindliche Kammer ausgeschlossen ist.

Der Erfindung liegt demgegenüber die Aufgabe zugrunde, bei einer Wirbelbettfeuerung der eingangs genannten Art eine Anordnung zu treffen, die es erlaubt, Flugstaub als Brennstoff mitzuverwenden, ohne dass dieser Flugstaub unverbrannt durch das Wirbelbett hindurchgeblasen wird, um Emmission der Anlage zu vermindern und den Verbrennungswirkungsgrad zu erhöhen.

Diese Aufgabe wird erfindungsgemäss durch die Merkmale des kennzeichnenden Teils des Anspruchs 1 gelöst. Durch diese Lösung stellt sich im Betrieb der Wirbelbettfeuerung an der Trennwand ein Umlauf von Bettmaterial ein, indem dieses zusammen mit dem getrennt vom Brennstoff zugeführten Flugstaub sich in dem Raum zwischen der Trennwand und der benachbarten Brennkammerwand abwärts bewegt und sodann - unterstützt von den auf den Spalt gerichteten Luftströmen - durch den Spalt hindurch in das eigentliche Wirbelbett gefördert wird. In dem Raum zwischen der Trennwand und der benachbarten Brennkammerwand erfolgt bei Vollast der Feuerung bereits eine Vorwärmung des im Flugstaub noch enthaltenen Brennbaren, und es beginnt schon eine langsame Verbrennung des genannten Brennbaren. Durch das Einführen der auf den Spalt gerichteten Luft wird dieser Verbrennungsvorgang beschleunigt, so dass die Verbrennung beim Eintreten des Flugstaubes in das eigentliche Wirbelbett bei vielen Teilchen schon abgeschlossen ist. Ein Teil des Flugstaubes agglomeriert sodann an den Körnern des Bettes, ohne durch die kaminartigen Stromfäden, die von den Mitteln zum Zuführen von Brennstoff ausgehen, ausgetragen zu werden. Als besonderer Vorteil ergibt sich, dass der Flugstaub und gegebenenfalls auch feine Fraktionen des Brennstoffs auf das Wirbelbett aufgeschüttet werden können, so dass sich für die Flugstaubzufuhr die Anwendung von Tragluft vermeiden lässt, die eine Bildung explosibler Suspensionen begünstigen würde.

Aus der DE-A-2 408 649 ist eine Wirbelbettfeuerung bekannt, bei der das Wirbelbett durch eine Ringwand in einen zentralen Bettteil und einen diesen umgebenden Ringbettteil unterteilt ist. In gleicher Weise ist auch die unter dem Wirbelbett befindliche Luftkammer in einen zentralen Teil und einen Ringteil geteilt und jeder dieser Teile hat einen eigenen Luftzufuhrstutzen. Durch beide fluidisierte Betteile strömt also die Luft aufwärts. Allenfalls oberhalb des Ringbettteils zugeführter Flugstaub würde sofort vom Wirbelbett weggeblasen.

Durch die Merkmale nach Anspruch 3 wird die erwähnte Umlaufbewegung des Bettmaterials zu einer Umwälzbewegung un die Trennwand herum, indem Material aus dem eigentlichen Wirbelbett über die Oberkante der Trennwand hinweg in den Raum zwischen der Brennkammerwand und der Trennwand gelangt. Dadurch ist man freier in der Bemessung der aus den Luftdurchtrittsöffnungen austretenden, gegen den Spalt gerichteten Brennluft. Wird diese Luftmenge grosser als nötig bemessen, so ergibt sich selbständig der eben genannte Rückfluss von Bettmaterial über die Oberkante der Trennwand.

Durch die Merkmale nach Anspruch 4 lässt sich der Luftverbrauch der Feuerung herabsetzen. Damit wird der Wirkungsgrad der Feuerung weiter verbessert und der $NO_x$-Gehalt der Abgase verringert.

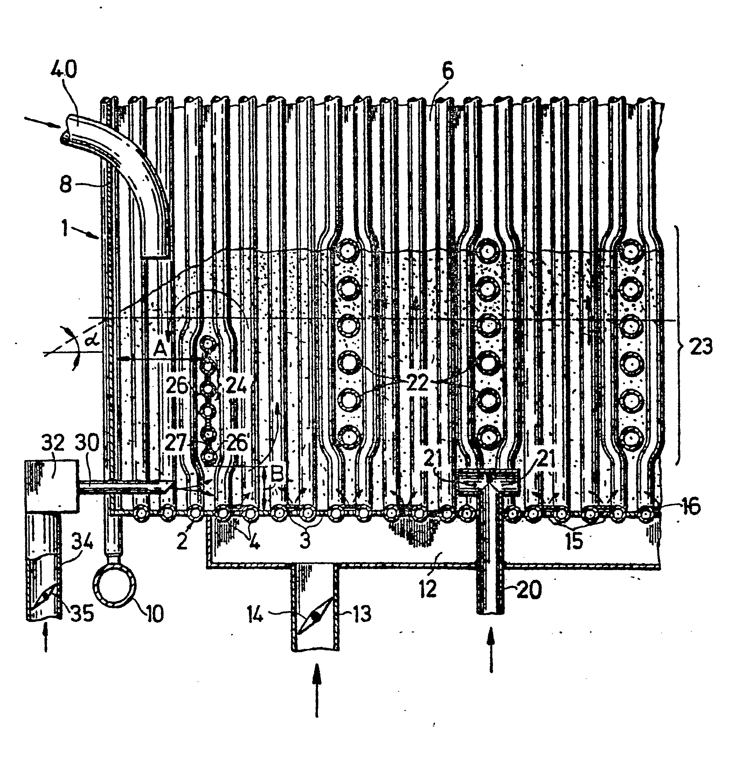

Ein Ausführungsbeispiel der Erfindung wird nun anhand der Zeichnung näher erläutert, die einen Vertikalschnitt durch einen Teil der Brennkammer einer erfindungsgemässen Wirbelbettfeuerung darstellt.

Eine Brennkammer 1 einer Wirbelbettfeuerung weist einen ebenen Brennkammerboden 2 mit rechteckigem Grundriss auf.

Der Boden 2 besteht aus parallelen Rohren 4, die über Stege 3 miteinander dicht verschweisst sind. Die von einem Wärmeübertragungsmittel durchströmten Rohre 4 sind längs einer zur Zeichenebene parallelen Kante in eine vertikale Ebene abgebogen und bilden in dieser Ebene die Rückwand 6 der Brennkammer 1. Rechtwinklig zur Zeichenebene ist eine Seitenwand 8 der Brennkammer vorgesehen. Die Seitenwand 8 besteht ebenfalls aus vertikalen Rohren und dazwischen dicht eingeschweissten Stegen; die Rohre dieser Wand gehen von einem Verteiler 10 aus. Sie ist mit dem Brennkammerboden 2 und mit der Rückwand 6 dicht verschweisst, wobei zwei Kanten der Brennkammer 1 gebildet werden. Auf der Unterseite des Brennkammerbodens 2 ist ein Luftkasten 12 angeschweisst, der über eine Leitung 13 mit Verbrennungsluft beschickt wird, deren Menge mittels einer Klappe 14 einstellbar ist. Im Bereich des Luftkastens 12 weisen die Stege 3 zwischen den Rohren 4 viele Bohrungen 15 auf, die durch an den benachbarten Rohren angeschweisste Bleche 16 gegen oben abgeschirmt sind, wie dies in der EP-A-0 019 652 des Anmelders näher beschrieben ist.

Der Brennkammerboden 2 und der Luftkasten 12 werden von vielen Zufuhrrohren 20 für körnigen Brennstoff, wie Kohle, und körnigen Zuschlag durchdrungen. Die Zufuhrrohre 20, von denen in der Zeichnung nur eines zu sehen ist, weisen an ihren oberen Enden horizontale Austrittsdüsen 21 auf. Brennstoff und Zuschlag werden in den Zufuhrrohren 20 mittels Tragluft gefördert.

Die Rückwand 6 wie auch eine nicht dargestellte Vorderwand der Brennkammer 1 werden von Rohren 22 durchdrungen, die innerhalb der Brennkammer U-förmige Rohrschlaufen in Form an sich bekannter Fahnenheizflächen bilden. Jeweils drei in einer vertikalen Ebene liegende Rohrschlaufen bilden eine Rohrtafel 23. Der Seitenwand 8 benachbart ist in einem mittleren Abstand A von dieser Wand 8 eine Trennwand 24 vorgesehen, die - analog zu den Rohrtafeln 23 - aus die Rückwand 6 bzw. die Vorderwand durchdringenden U-Rohren gebildet ist. Im Gegensatz zu den Rohrtafeln 23 sind jedoch die Rohre 26 der Trennwand 24 über nichtunterbrochene Stege 27 miteinander verbunden. Die Rohre 22 und 26 sind ebenfalls von einem Wärmeübertragungsmittel, z. B. Wasser, durchströmt.

Im Raum zwischen der Seitenwand 8 und der Trennwand 24 ist nahe dem Brennkammerboden 2 eine Reihe von etwa horizontal angeordneten Blasrohren 30 vorgesehen, die die Seitenwand 8 durchdringen und an einem ausserhalb der Brennkammer 1 angebrachten Verteiler 32 angeschlossen sind. Dieser Verteiler 32 wird über eine Leitung 34 mit Verbrennungsluft gespeist. Die Leitung 34 ist mit einer Drosselklappe 35 zum Einstellen der Luftmenge versehen.

Der vertikale Abstand B der Unterkante der Trennwand 24 vom Brennkammerboden 2 ist 0,5 - 3 mal so gross wie der Abstand A.

Bei Vollast der Feuerung reicht die Höhe des Wirbelbettes bis etwa zum obersten Rohr 22 der Rohrtafeln 23. Bei Kleinlast befindet sich das Niveau des Wirbelbettes etwa auf der strichpunktiert angegebenen Höhe.

Oberhalb des Niveaus des Wirbelbettes sind über den Blasrohren 30 Schüttrohre 40 angeordnet. Über diese Schüttrohre erfolgt die Zufuhr von Flugstaub und gegebenenfalls von vorzugsweise feinkörnigen Brennstoff-Fraktionen in den Raum zwischen der Seitenwand 8 und der Trennwand 24.

Die beschriebene Wirbelbettfeuerung funktioniert wie folgt:

Zwischen der Trennwand 24 und der Seitenwand 8 befindet sich eine Schüttung aus inertem Bettmaterial mit wenig Brennstoffkörnern und über die Schüttrohre 40 eingetragenem Gemisch aus Flugstaub und Feinkorn des Brennstoffes. Aus dieser Schüttung wird Material mittels der über die Blasrohre 30 eingeführten Luft durch den Spalt unterhalb der Trennwand 24 in das Wirbelbett geblasen, das rechts der Trennwand 24 voll ausgebildet ist. In diesem Wirbelbett befindet sich das Material in der durch die Löcher 15 aufsteigenden Luft in Schwebe.

Da im Bereich zwischen der Seitenwand 8 und der Trennwand 24 praktisch keine Luft aufsteigt, liegt dort das Bettniveau tiefer als rechts der Trennwand 24. Es fliesst daher Material aus dem Wirbelbett über die Oberkante der Trennwand 24 hinweg in den genannten Bereich, wobei sich der Schüttwinkel α einstellt. Damit entsteht. eine eigentliche Zirkulation um die Trennwand 24 herum. Das aus dem Wirbelbett kommende und die Trennwand überquerende Material ist glühend; es nimmt den über die Schüttrohre 40 zugeführten Flugstaub und feinkörnigen Brennstoff auf. Die mit diesem feinkörnigen Material mittransportierte Luft genügt, um an diesem Material eine langsame Verbrennung einzuleiten. Bei den feinsten Teilchen wird diese Verbrennung während ihres Absinkens gegen die Blasrohre 30 beendet, wobei die freiwerdende Wärme über die Trennwand 24 und/oder die Seitenwand 8 abgeführt wird. Diese Wände sind gegebenenfalls auf den einander zugewendeten Seiten mit Isoliermaterial abgeschirmt, um nicht zuviel Wärme abzuführen.

Geraten die Flugstaubteilchen in den Luftstrom der Blasrohre 30, so wird die Verbrennung angefacht.

Mit der erfindungsgemässen Wirbelbettfeuerung gelingt es daher, Flugstaub auszubrennen und auf bekannte Art kontinuierlich oder diskontinuierlich aus der Wirbelschicht auszutragen.

Die Oberkante der Trennwand 24 liegt vorzugsweise im Höhenbereich zwischen dem höchsten Bettniveau und einem Bettniveau, das sich in fluidisiertem Zustand um den Abstand 2A unterhalb des tiefsten Bettniveaus befindet.

**Patentansprüche**

1. Wirbelbettfeuerung mit einer Brennkammer, deren Wände (6, 8) und deren Boden (2) aus miteinander gasdicht verschweissten, ein Wärmeübertragungsmittel führenden Rohren (4) bestehen und deren Boden (2) Luftdurchtrittsöffnungen (15) aufweist, wobei Mittel (13) zum Zuführen von Verbrennungsluft zu den Luftdurchtrittsöffnungen (15) sowie Mittel (20, 21) zum Zuführen von Brennstoff und Zuschlagstoffen vorgesehen sind, wobei ferner mehrere in das Wirbelbett eintauchende, sich etwa parallel zu einer Brennkammerwand (8) erstreckende Wärmeübertragungsflächen (23) angeordnet sind und wobei im Wirbelbett zwischen einer Wärmeübertragungsfläche (23), die einer Brennkammerwand (8) benachbart ist, und dieser Brennkammerwand (8) etwa parallel zu dieser eine etwa vertikale Trennwand (24) angeordnet ist, deren Unterkante zwischen sich und dem Brennkammerboden (2) einen Spalt frei lässt, dadurch <u>gekennzeichnet</u>, dass die Mittel (20, 21) zum Zuführen von Brennstoff und Zuschlagstoffen diese Stoffe dem eigentlichen Wirbelbett zuführen, dass Mittel (30, 32, 34) vorgesehen sind, die in dem Bereich zwischen der genannten Brennkammerwand (8) und der Trennwand (24) gegen den Spalt gerichtete Luftströme erzeugen und dass weitere Mittel (40) vorgesehen sind, die Flugstaub oberhalb des genannten Bereiches zuführen.

2. Feuerung nach Anspruch 1, dadurch gekennzeichnet, dass der Abstand A zwischen der Trennwand (24) und der benachbarten Brennkammerwand (8) im Mittel mindestens 10 cm und der Abstand B der Unterkante der Trennwand vom Boden $\frac{A}{2}$ bis 3A betragen.

3. Feuerung nach Anspruch 1 oder 2, dadurch gekennzeichnet, dass die Oberkante der Trennwand (24) tiefer liegt als das tiefste Niveau des Wirbelbettes.

4. Feuerung nach einem der Ansprüche 1 bis 3, dadurch gekennzeichnet, dass die die gegen den Spalt gerichteten Luftströme erzeugenden Mittel (30, 32, 34) von den Mitteln (13) zum Zuführen der Verbrennungsluft unabhängig einstellbar sind.

5. Feuerung nach einem der Ansprüche 1 bis 4, dadurch gekennzeichnet, dass die Trennwand (24) als von einem Wärmeübertragungsmittel durchströmte Rohrwand ausgebildet ist.

6. Feuerung nach einem der Ansprüche 1 bis 5, dadurch gekennzeichnet, dass die Trennwand (24) und die benachbarte Brennkammerwand (8) auf den einander zugewendeten Seiten mit einer Wärmeisolation versehen sind.

7. Feuerung nach einem der Ansprüche 1 bis 6, dadurch gekennzeichnet, dass die Mittel (40) zum Zuführen von Flugstaub in der der Trennwand (24) benachbarten Brennkammerwand (8) oberhalb des Wirbelbettes angeordnet sind.

## Claims

1. A fluidized bed firing having a combustion chamber whose walls (6, 8) and base (2) are embodied by tubes (4) welded together in gas-tight fashion and conveying a heat-transfer agent and whose base (2) is formed with air passages (15), means (13) for supplying combustion-supporting air to the passages (15) and means (20, 21) for supplying fuel and additives being provided, a number of heat exchange surfaces (23) being provided which dip into the fluidized bed and extend substantially parallel to a combustion chamber wall (8), while in the fluidized bed, between a heat exchange surface (23), which is near a combustion chamber wall (8), and such wall (8), a substantially vertical partition (24) is so disposed as to be substantially parallel to the last-mentioned wall (8), the bottom edge of the partition (24) leaving a gap clear between such edge and the combustion chamber base (2), characterised in that the means (20, 21) for supplying fuel and additives supply them to the actual fluidized bed, means (30, 32, 34) which produce air flows directed towards the gap in the zone between the combustion chamber well (8) and the partition (24) are provided, and further means (40) which supply fluff above such zone are provided.

2. A firing according to claim 1, characterised in that the distance (A) between the partition (24) and the adjacent combustion chamber wall (8) is on the average at least 10 cm and the distance (B) of the bottom edge of the partition (24) from the base (2) is from A/2 to 3a.

3. A firing accordig to claim 1 or 2, characterised in that the top edge of the partition (24) is lower than the lowest level of the fluidized bed,

4. A firing according to any of claims 1 - 3, characterised in that the means (30, 32, 34) producing the air flows directed towards the gap are adjustable independently of the means (13) for supplying the combustion-supporting air.

5. A firing according to any of claims 1 - 4, characterised in that the partition (24) is in the form of a tube bank flowed through by a heat-exchange agent.

6. A firing according to any of claims 1 - 5, characterised in that the partition (24) and the adjacent combustion chamber wall (8) have heat insulation on the sides near one another.

7. A firing according to any of claims 1 - 6, characterised in that the fluff-supplying means (40) are disposed in the combustion chamber wall (8) adjacent the partition (24) and above the fluidized bed.

## Revendications

1. Foyer à lit fluidisé comportant une chambre de combustion dont les parois (6, 8) et le fond (2) sont composés de tubes (4) conduisant un fluide caloporteur, soudés entre eux de façon étanche aux gaz, et dont le fond (2) présente des ouvertures (15) de passage d'air, des moyens (13) d'amenge d'air de combustion aux ouvertures (15) de passage d'air ainsi que des moyens (20, 21) d'amenée de combustible et de matières d'appoint étant prévus, plusieurs surfaces (23) d'échange de chaleur, s'étendant à peu près parallèlement à une paroi (8) de la chambre de combustion, étant disposées de façon à plonger dans le lit fluidisé, et une cloison sensiblement verticale (24) étant disposée dans le lit fluidisé, entre une surface (23) d'échange de chaleur voisine d'une paroi (8) de la chambre de combustion et cette paroi (8) de la chambre de combustion, à peu près parallèlement à celle-ci, une fente étant dégagée entre le bord inférieur de cette cloison et le fond (2) de la chambre de combustion, caractérisé en ce que les moyens (20, 21) d'amenée du combustible et des matières d'appoint amènent ces matières dans le lit fluidisé même, en ce qu'il est prévu des moyens (30, 32, 34) qui produisent, dans la zone comprise entre la paroi précitée (8) de la chambre de combustion et la cloison (24), un courant d'air dirigé sur la fente, et en ce qu'il est prévu d'autres moyens (40) qui amènent des cendres volantes au-dessus de la zone précitée.

2. Foyer selon la revendication 1, caractérisé en ce que la distance A comprise entre la cloison (24) et la paroi voisine (8) de la chambre de combustion atteint en moyenne au moins 10 cm et la distance B entre le bord inférieur de la cloison et le fond est comprise entre $\frac{A}{2}$ et 3A.

3. Foyer selon la revendication 1 ou 2, caractérisé en ce que le bord supérieur de la cloison (24) est plus bas que le niveau le plus bas du lit fluidisé.

4. Foyer selon l'une des revendications 1 à 3, caractérisé en ce que les moyens (30, 32, 34) produisant un courant d'air dirigé vers la fente sont réglables indépendamment des moyens (13) d'amenée de l'air de combustion.

5. Foyer selon l'une des revendications 1 à 4, caractérisé en ce que la cloison (24) est réalisée sous la forme d'une plaque à tubes parcourue par un fluide caloporteur.

6. Foyer selon l'une des revendications 1 à 5, caractérisé en ce qu'un calorifugeage est prévu sur les faces tournées l'une vers l'autre de la cloison (24) et de la paroi voisine (8) de la chambre de combustion.

7. Foyer selon l'une des revendications 1 à 6, caractérisé en ce que les moyens (40) d'amenée de cendres volantes, situés dans la paroi (8) de la chambre de combustion, voisine de la cloison (24), sont disposés au-dessus du lit fluidisé.